**Europäisches Patentamt**

**European Patent Office**

**Office européen des brevets**

(11) Veröffentlichungsnummer: **0 414 300 A1**

# EUROPÄISCHE PATENTANMELDUNG

(21) Anmeldenummer: 90202127.8

(51) Int. Cl.5: **B62D 1/04**

(22) Anmeldetag: **04.08.90**

(30) Priorität: **19.08.89 DE 3927383**

(43) Veröffentlichungstag der Anmeldung:
**27.02.91 Patentblatt 91/09**

(84) Benannte Vertragsstaaten:
**BE DE ES FR GB IT NL SE**

(71) Anmelder: **KOLBENSCHMIDT Aktiengesellschaft**
**Karl-Schmidt-Strasse 8/12 Postfach 1351**
**D-7107 Neckarsulm(DE)**

(72) Erfinder: **Kreuzer, Martin**
**Wendelinusweg 2**
**D-8751 Kleinwallstadt(DE)**

(74) Vertreter: **Rieger, Harald, Dr.**
**Reuterweg 14**
**D-6000 Frankfurt a.M.(DE)**

(54) Skelettkonstruktion für Kraftfahrzeug-Lenkräder.

(57) Zur Verringerung des Massenträgheitsmoments ist der im Querschnitt rohrförmige Lenkradkranz (4) einer Skelettkonstruktion für Kraftfahrzeug-Lenkräder teilweise mit einem fluiden Medium (6) gefüllt.

# Fig. 2

EP 0 414 300 A1

## SKELETTKONSTRUKTION FÜR KRAFTFAHRZEUG-LENKRÄDER

Die Erfindung betrifft eine Skelettkonstruktion für Kraftfahrzeug-Lenkräder, bestehend aus Lenkradnabe, im Querschnitt rohrförmigem Lenkradkranz und diese verbindende Lenkradspeichen.

Moderne Kraftfahrzeuge besitzen infolge der vergleichsweise hohen aktiven Fahrsicherheit und des Fahrkomforts einen solchen Gesamtkomfort, daß bereits geringste Störungen im Schwingungsniveau vom Fahrer des Kraftfahrzeugs als störend empfunden werden. Zu den signifikanten Störquellen gehört die Lenkungsunruhe, eine Schwingungsform des gesamten Achssystems des Kraftfahrzeugs, insbesondere der Aufhängung der Vorderachse einschließlich des Lenksystems, die im Geschwindigkeitsbereich von ca. 80 bis 130 km/h vom Fahrer des Kraftfahrzeugs als Drehschwingungen (Wobbeln) und Vertikalschwingungen (Schütteln, Zittern) am Lenkrad selbst wahrgenommen werden. Dem durch statische Unwucht erfolgenden Springen der Räder und durch dynamische Unwucht hervorgerufene Taumelbewegungen sowie den durch parametererregte Schwingungen infolge veränderlicher Feder-und Dämpfungseigenschaften der Reifen in Querrichtung erzeugten Flatterschwingungen hervorgerufenen Lenkraddrehschwingungen begegnet man durch ein hohes Trägheitsmoment des Lenkrades, d.h. durch eine große Schwungmasse.

Infolge der Unwucht der Räder an der Hinterachse entstehen Horizontalschwingungen des Fahrzeugaufbaus und damit Vertikalschwingungen des Lenkrades. Zur Beseitigung des dadurch erzeugten Lenkradschüttelns ist eine kleine Lenkradmasse anzustreben.

Lenkradüberschwingungen treten häufig bei front- und allradgetriebenen Kraftfahrzeugen nach Kurvenfahrten auf, wenn man das Lenkrad selbständig zurückstellen läßt und gleichzeitig mit maximaler Antriebskraft beschleunigt wird. Die daraus entstehenden Fahrzeugschwingungen um die Roll- und Hochachse (Wanken und Gieren) des Kraftfahrzeugs kann durch ein kleines Trägheitsmoment, d.h. durch eine kleine Schwungmasse des Lenkrades im Sinne einer Fahrzeugstabilisierung beeinflußt werden. Die Bewertung der Parametereinflüsse für das Lenkradüberschwingen wird über die Frequenz und die Abklingrate als Funktion des Lenkradträgheitmoments vorgenommen. Eine Verringerung des Lenkradträgheitsmoments wirkt stark fahrzeugstabilisierend. Faßt man die lenkradspezifischen Forderungen zur Optimierung des Fahrkomforts und Fahrverhaltens eines Kraftfahrzeugs zusammen, so ergibt sich für das Lenkrad ein Konstruktionsprofil mit den Merkmalen

- geringes Gewicht, wobei die Masse möglichst drehachsennah anzuordnen ist (Schütteln, Zittern) und
- Trägheitsmoment oder Schwungmasse als Kompromiß zwischen Lenkraddrehschwingung und Lenkradüberschwingen, wobei der Kompromiß fahrzeugspezifisch unterschiedlich zu suchen ist.

Aus der Berechnung des Schwungmoments folgt, daß bei vorgegebenen Abmessungen und damit Durchmesser des Lenkrades eine Beeinflussung des Trägheitsmomentes nur über die Absenkung der dem Lenkradradius zuordenbaren Masse möglich ist. So ist in der EP-A-0 292 038 eine Skelettkonstruktion für Kraftfahrzeug-Lenkräder beschrieben, bei der Lenkradnabe, Lenkradspeichen und der Umguß der Lenkradspeichen am Lenkradkranz einteilig aus Aluminiumdruckguß gegossen sind und der Lenkradkranz je nach gewünschtem Trägheitsmoment aus Stahl oder Aluminium bzw. Aluminiumlegierung als Voll- oder Hohlprofil ausgeführt ist. Die DE-A-3 625 372 beinhaltet ein Lenkrad, dessen Kranz sowie die aus thermoplastischem Kunststoff bestehenden Lenkradnabe und Lenkradspeiche mit einer Schicht eines verformbaren Kunststoffs ummantelt sind, wobei der Lenkradkranz je nach gewünschtem Massenträgheitsmoment aus Stahl, Leichtmetall oder aus gewickelten, in Kunststoff eingebetteten Endlosfasern stehen kann. Bei gleichen Lenkradabmessungen ist je nach Fahrzeugtyp eine Variation des Trägheitsmomentes bei jeweils minimaler Lenkradmasse durch unterschiedliche Lenkradkranzausführungen bei gleicher Nabengeometrie und gewichtsoptimierter Speichengeometrie möglich.

Bei bestimmtem vorgegebenem Lenkradstyling beispielsweise bei einem Einspeichenlenkrad oder bei einem Zweispeichenlenkrad mit pfeilartiger Anordnung der Lenkradspeichen im unteren Lenkradsegment stößt man dabei allerdings sehr leicht an die Festigkeitsgrenzen des Gesamtsystems; denn insbesondere muß ein Lenkrad bei Abstützkräften in Fahrtrichtung eine ausreichende Festigkeit aufweisen. Eine in Geradeausfahrtrichtung am größeren Umfangswinkel angreifende Kraft von 380 N darf das Lenkrad nicht mehr als 1,5 mm bleibend verformen.

Es ist die Aufgabe der vorliegenden Erfindung, die durch die Festigkeitsanforderungen vorgegebenen Grenzen eines Lenkrades bei gleicher Abmessung zu überwinden und die Massenträgheitsmomente noch weiter abzusenken, ohne die Betriebs- und Unfallsicherheit des Lenkrades zu beeinträchtigen.

Die Lösung dieser Aufgabe besteht darin, daß der rohrförmige Lenkradkranz teilweise mit einem fluiden Medium gefüllt ist.

Je nach Dichte des im Lenkradkranz befindlichen fluiden Mediums ist die Fluidmenge unterschiedlich, vorzugsweise beträgt diese 0,5 bis 2,5, insbesondere 1,0 bis 2,0 % des Gewichtes des Lenkrads.

Als fluide Medien kommen insbesondere Öl-Wasser-Emulsionen und Glycol-Wasser-Mischungen in Betracht.

Da die beim Lenkradrückschwingen auf den Lenkradkranz wirkenden Beschleunigungskräfte direkt der Masse des fluiden Medium proportional sind und sowohl der Lenkradkranz als auch das fluide Medium gleiche Anfangsbeschleunigungen erleiden, ist das Kräfteprodukt linear masseabhängig, so daß die Lenkradrückschwingung gedämpft wird und kein Überschwingen eintritt. Eine weitere "Bremswirkung" ist der Reibung zwischen dem fluiden Medium und der Innenwandung des Lenkradkranzes zuzuschreiben.

Durch die vorstehend beschriebene Maßnahme wird das Lenkradüberschwingen reduziert, weil sich stets zwei Kraftkomponenten gegenüberstehen und das fluide Medium der Bewegung des Lenkradkranzes nachläuft. Damit ist eine Absenkung des Massenträgheitsmoments bzw. der Schwungmasse um mehr als 10 % möglich ohne die für die Steifigkeit des Lenkrades erforderliche Festigkeit durch Veränderungen am Werkstoff oder in den Abmessungen zu beeinflussen.

Die Erfindung ist nachfolgend näher und beispielhaft erläutert.

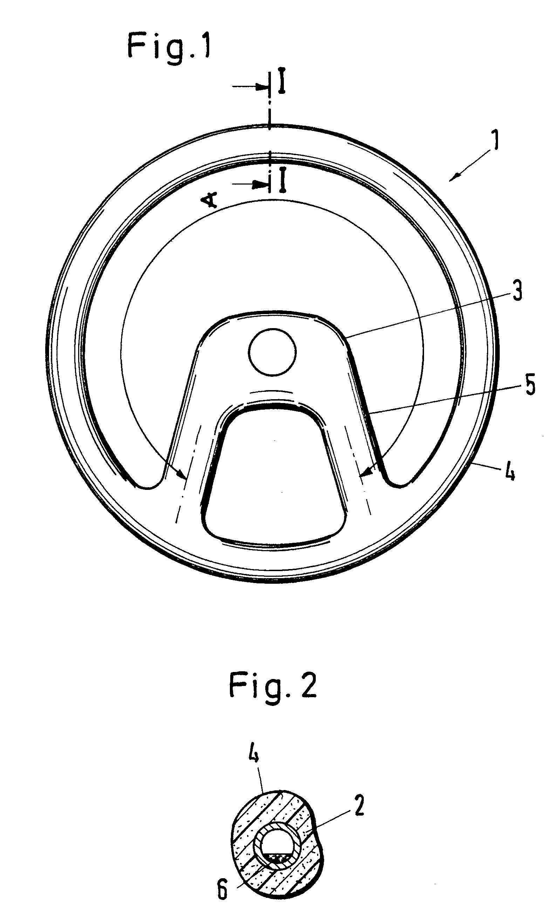

In Figur 1 ist die Draufsicht auf ein Lenkrad (1) mit einer aus PU-Schaum bestehenden Ummantelung (2) des Lenkradskelettes (2) dargestellt, dessen im kleineren Umfangswinkel pfeilartig angebrachten mit der Lenkradnabe (3) und dem Lenkradkranz (4) verbundenen Lenkradspeichen (5) einen spitzen Winkel von 30° bilden. Das Lenkrad (1), von der Fig. 2 einen Querschnitt entlang der Schnittlinie I-I zeigt, wiegt 1970,2 g und besitzt einen Durchmesser von 450 mm. Der Lenkradkranz (4) wurde mit 27,5 g eines Glycol-Wasser-Gemisches (6) gefüllt.

**Ansprüche**

1. Skelettkonstruktion für Kraftfahrzeug-Lenkräder, bestehend aus Lenkradnabe, im Querschnitt rohrförmigem Lenkradkranz und diesen verbindende Lenkradspeichen (5), dadurch gekennzeichnet, daß der Lenkradkranz (4) teilweise mit einem fluiden Medium (6) gefüllt ist.

2. Skelettkonstruktion nach Anspruch 1, dadurch gekennzeichnet, daß die Menge des fluiden Mediums (6) 0,5 bis 2,5 %, insbesondere 1 bis 2 % des Gewichts des Lenkrads (1) beträgt.

3. Skelettkonstruktion nach den Ansprüchen 1 und 2, dadurch gekennzeichnet, daß das fluide Medium (6) aus Wasser-Öl-Emulsion oder Glycol-Wasser-Gemisch besteht.

## Fig.1

## Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | DE - A1 - 3 827 794 (TOYODA) * Fig. 5 * -- | | B 62 D 1/04 |
| D,A | DE - A1 - 3 625 372 (KOLBENSCHMIDT AG) * Fig. * -- | 1 | |
| D,A | EP - A2 - 0 292 038 (KOLBENSCHMIDT AG) * Fig. * ---- | 1 | |

| | RECHERCHIERTE SACHGEBIETE (Int Cl⁵) |
|---|---|
| | B 62 D |

Der vorliegende Recherchenbericht wurde für alle Patentansprüche erstellt

| Recherchenort | Abschlußdatum der Recherche | Prüfer |
|---|---|---|
| WIEN | 28-11-1990 | PANGRATZ |